(19) **Europäisches Patentamt**
**European Patent Office**
**Office européen des brevets**

(11) **EP 4 130 064 A1**

(12) **EUROPEAN PATENT APPLICATION**
published in accordance with Art. 153(4) EPC

(43) Date of publication:
**08.02.2023 Bulletin 2023/06**

(21) Application number: **21780652.0**

(22) Date of filing: **04.03.2021**

(51) International Patent Classification (IPC):
**C08F 220/14** *(1974.07)* **C08J 9/16** *(1974.07)*

(52) Cooperative Patent Classification (CPC):
**C08F 220/14; C08J 9/16**

(86) International application number:
**PCT/JP2021/008342**

(87) International publication number:
**WO 2021/199878 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2020 JP 2020060992**

(71) Applicant: **Kaneka Corporation**
**Osaka-shi, Osaka 530-8288 (JP)**

(72) Inventors:
• **KOBAYASHI, Tsuyoshi**
**Takasago-shi, Hyogo 676-8688 (JP)**
• **SUZUKI, Kirito**
**Takasago-shi, Hyogo 676-8688 (JP)**
• **KIGUCHI, Taro**
**Takasago-shi, Hyogo 676-8688 (JP)**

(74) Representative: **Vossius & Partner**
**Patentanwälte Rechtsanwälte mbB**
**Siebertstraße 3**
**81675 München (DE)**

(54) **EXPANDABLE METHYL-METHACRYLATE-BASED RESIN PARTICLES, METHYL-METHACRYLATE-BASED EXPANDED PARTICLES, METHYL-METHACRYLATE-BASED MOLDED FOAM, AND EVAPORATIVE PATTERN**

(57)   It is an object to provide expandable methyl methacrylate resin particles capable of providing a foamed molded product which has excellent surface quality and with which a residue hardly remains after burning. Provided are expandable methyl methacrylate resin particles containing: a base resin including, as constitutional units, a specific amount of a methyl methacrylate unit, a specific amount of an acrylic ester unit, and a specific amount of a constitutional unit derived from a crosslinking agent; and a blowing agent, the expandable methyl methacrylate resin particles having a volume-average particle size of 0.30 mm to 0.50 mm.

EP 4 130 064 A1

**Description**

Technical Field

The present invention relates to expandable methyl methacrylate resin particles, methyl methacrylate expanded particles, a methyl methacrylate foamed molded product, and an evaporative pattern.

Background Art

As a technique for carrying out metal casting, evaporative pattern casting technique (full mold technique) is known. The evaporative pattern casting technique is a technique for producing a casting by burying a pattern made of a foamed molded product in casting sand and pouring a molten metal to the foamed molded product so that the expansion-formed body is replaced with the metal. The full mold technique uses a foamed molded product of a methyl methacrylate polymer from the viewpoint of reduction in a residue remaining after casting.

Examples of a conventional technique related to expandable methyl methacrylate resin particles for producing a foamed molded product made of a methyl methacrylate polymer encompass such techniques as disclosed in Patent Literatures 1 and 2. Patent Literature 1 discloses expandable methyl methacrylate resin particles which are obtained by polymerizing methyl methacrylate, acrylic ester, and a polyfunctional monomer and which have a particle size of 0.5 mm to 1.4 mm.

Patent Literature 2 discloses expandable methyl methacrylate resin particles which are obtained by carrying out suspension polymerization with respect to a mixture of a methacrylate ester monomer and a styrene compound and which have an average particle size of 0.3 mm to 0.5 mm.

Citation List

[Patent Literatures]

[Patent Literature 1] International Publication No. WO2016/047490
[Patent Literature 2] Japanese Patent Application Publication, Tokukai, No. 2003-261603

Summary of Invention

Technical Problem

However, the above-described conventional techniques have some room for improvements in terms of (i) surface quality of a foamed molded product provided by expandable methyl methacrylate resin particles and (ii) reduction in residue remaining after burning of the foamed molded product.

In consideration of these circumstances, an embodiment of the present invention has an object to provide novel expandable methyl methacrylate resin particles capable of providing a foamed molded product which has excellent surface quality and with which a residue hardly remains after burning.

Solution to Problem

The inventors of the present invention carried out diligent study in order to attain the object. As a result, the inventors of the present invention completed the present invention.

Expandable methyl methacrylate resin particles in accordance with an embodiment of the present invention contain: a base resin including, as constitutional units, a methyl methacrylate unit, an acrylic ester unit, and a constitutional unit derived from a crosslinking agent; and a blowing agent, the expandable methyl methacrylate resin particles having a volume-average particle size of 0.30 mm to 0.50 mm, in the base resin, (a) a content of the methyl methacrylate unit being 90.0 parts by weight to 99.0 parts by weight and a content of the acrylic ester unit being 1.0 part by weight to 10.0 parts by weight, relative to a total amount of 100 parts by weight of the methyl methacrylate unit and the acrylic ester unit, (b) a content of the constitutional unit derived from the crosslinking agent being not less than 0.05 parts by weight and less than 0.20 parts by weight relative to the total amount of 100 parts by weight of the methyl methacrylate unit and the acrylic ester unit, and (c) a content of a constitutional unit derived from an aromatic vinyl compound being not more than 2.5 parts by weight relative to 100 parts by weight of the base resin.

Advantageous Effects of Invention

An embodiment of the present invention brings about an effect of enabling provision of expandable methyl methacrylate resin particles capable of providing a foamed molded product which has excellent surface quality and with which a residue hardly remains after burning.

Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment derived by combining technical means disclosed in differing embodiments or examples. Further, it is possible to form a new technical feature by combining the technical means disclosed in the respective embodiments. All academic and patent literatures cited in the present specification are incorporated herein by reference. Any numerical range expressed as "A to B" herein means "not less than A and not more than B (i.e., a range from A to B which includes both A and B)" unless otherwise stated.

Herein, "expandable methyl methacrylate resin particles" may sometimes be expressed as "expandable resin particles", "methyl methacrylate expanded particles" may sometimes be expressed as "expanded particles", and a "methyl methacrylate foamed molded product" may sometimes be expressed as a "foamed molded product".

[1. Technical idea of an embodiment of the present invention]

As a result of study by the inventors of the present invention, a foamed molded product obtained by using expandable resin particles disclosed in Patent Literatures 1 and 2 has some room for improvements in terms of surface quality and reduction in residue remaining after burning.

For example, the expandable methyl methacrylate resin particles disclosed in Patent Literature 1 have a large particle diameter. Thus, during production of a mold molded product with use of expanded particles produced by expanding the expandable methyl methacrylate resin particles, the expanded particles have a poor filling property with respect to a thin place (a narrow place in a mold). As a result, according to the technique disclosed in Patent Literature 1, a molded body having poor surface appearance is obtained.

A foamed molded product disclosed in Patent Literature 2 and made of the methyl methacrylate polymer contains a styrene component so as to have better surface smoothness. The inventors of the present invention uniquely found that a styrene componentcontaining foamed molded product has a residue remaining after burning and adversely affects quality of a casting.

In consideration of these circumstances, an embodiment of the present invention is to provide expandable methyl methacrylate resin particles, methyl methacrylate expanded particles, and a methyl methacrylate foamed molded product each having excellent expandability, an excellent filling property, and an excellent shrinking property.

The inventors of the present invention uniquely found the following problems: (1) a problem such that methyl methacrylate expanded particles produced by expanding expandable methyl methacrylate resin particles having a large volume-average particle size have a poor mold filling property; (2) a problem such that expandable methyl methacrylate resin particles having a small volume-average particle size have poor expandability; (3) a problem such that methyl methacrylate expanded particles produced by expanding expandable methyl methacrylate resin particles having a small volume-average particle size shrink to a great degree during molding; and (4) a problem such that as a result of the above (2) and (3), a foamed molded product produced by carrying out in-mold molding with respect to the methyl methacrylate expanded particles has poor surface quality. The inventors of the present invention carried out diligent study with attention paid to the problems thus uniquely found. As a result, the inventors of the present invention completed the present invention.

[2. Expandable methyl methacrylate resin particles]

Expandable methyl methacrylate resin particles in accordance with an embodiment of the present invention contain: a base resin including, as constitutional units, a methyl methacrylate unit, an acrylic ester unit, and a constitutional unit derived from a crosslinking agent; and a blowing agent, the expandable methyl methacrylate resin particles having a volume-average particle size of 0.30 mm to 0.50 mm, in the base resin, (a) a content of the methyl methacrylate unit being 90.0 parts by weight to 99.0 parts by weight and a content of the acrylic ester unit being 1.0 part by weight to 10.0 parts by weight, relative to a total amount of 100 parts by weight of the methyl methacrylate unit and the acrylic ester unit, (b) a content of the constitutional unit derived from the crosslinking agent being not less than 0.05 parts by weight and less than 0.20 parts by weight relative to the total amount of 100 parts by weight of the methyl methacrylate unit and the acrylic ester unit, and (c) a content of a constitutional unit derived from an aromatic vinyl compound being not more than 2.5 parts by weight relative to 100 parts by weight of the base resin.

"Expandable methyl methacrylate resin particles in accordance with an embodiment of the present invention" may be hereinafter referred to as "the present expandable resin particles".

It is possible to provide expanded particles by using a known method to expand the present expandable resin particles. It is possible to provide a foamed molded product by using a known method to carry out in-mold molding with respect to expanded particles produced by expanding the present expandable resin particles.

The present expandable resin particles have the above-described configuration, and therefore can advantageously provide a foamed molded product which has excellent surface quality and with which a residue hardly remains after burning. Surface quality of a foamed molded product is herein evaluated by surface appearance of the foamed molded product as described in Examples below. Surface quality of a foamed molded product is affected by expandability of expandable resin particles, which are a raw material of the foamed molded product, as well as a filling property and a shrinking property of expanded particles. In a case where expandable resin particles have more excellent expandability and expanded particles have a more excellent filling property and a more excellent shrinking property, a foamed molded product have more excellent surface quality. Thus, the present expandable resin particles have the above-described configuration, and therefore can also advantageously (a) have excellent expandability and (b) provide expanded particles having an excellent filling property and an excellent shrinking property.

(Base resin)

A base resin included in the present expandable resin particles includes, as constitutional units, a methyl methacrylate unit, an acrylic ester unit, and a constitutional unit derived from a crosslinking agent. Herein, the "methyl methacrylate unit" refers to a constitutional unit derived from a methyl methacrylate monomer, and the "acrylic ester unit" refers to a constitutional unit derived from an acrylic ester monomer. The expression "monomer" may occasionally be omitted herein. Thus, for example, the simple expressions "methyl methacrylate" and "acrylic ester" herein mean the "methyl methacrylate monomer" and the "acrylic ester monomer", respectively.

In the base resin included in the present expandable resin particles, (a) a content of the methyl methacrylate unit is 90.0 parts by weight to 99.0 parts by weight, and a content of the acrylic ester unit is 1.0 part by weight to 10.0 parts by weight, (b) preferably, the content of the methyl methacrylate unit is 91.0 parts by weight to 99.0 parts by weight, and the content of the acrylic ester unit is 1.0 part by weight to 9.0 parts by weight, (c) more preferably, the content of the methyl methacrylate unit is 92.0 parts by weight to 97.0 parts by weight, and the content of the acrylic ester unit is 3.0 parts by weight to 8.0 parts by weight, (d) more preferably, the content of the methyl methacrylate is 93.0 parts by weight to 96.0 parts by weight, and the content of the acrylic ester is 4.0 parts by weight to 7.0 parts by weight, (e) even more preferably, the content of the methyl methacrylate unit is 94.0 parts by weight to 96.0 parts by weight, and the content of the acrylic ester unit is 4.0 parts by weight to 6.0 parts by weight, and (f) particularly preferably, the content of the methyl methacrylate unit is 94.5 parts by weight to 95.0 parts by weight, and the content of the acrylic ester unit is 5.0 parts by weight to 5.5 parts by weight, relative to a total amount of 100 parts by weight of the methyl methacrylate unit and the acrylic ester unit. In a case where the content of the methyl methacrylate unit is more than 99.0 parts by weight relative to the total amount of 100 parts by weight of the methyl methacrylate unit and the acrylic ester unit in the base resin, expandable resin particles tend to have poor expandability and poor formability. This makes it difficult for the expandable resin particles to provide a foamed molded product that has excellent surface quality. In a case where the content of the acrylic ester unit is more than 10 parts by weight relative to the total amount of 100 parts by weight of the methyl methacrylate unit and the ester methacrylate unit in the base resin, expanded particles tend to easily shrink.

Examples of the acrylic ester in accordance with an embodiment of the present invention encompass methyl acrylate, ethyl acrylate, propyl acrylate, and butyl acrylate. The acrylic ester is particularly preferably butyl acrylate. In other words, the acrylic ester unit is particularly preferably a butyl acrylate unit derived from a butyl acrylate monomer. Butyl acrylate provides a great effect of reducing a glass transition temperature of the base resin. Thus, with this configuration, it is possible to provide expandable resin particles that have excellent expandability.

The base resin of the present expandable resin particles includes a constitutional unit derived from a crosslinking agent. The present expandable resin particles that contain the base resin including the constitutional unit derived from the crosslinking agent can provide expanded particles that have an excellent shrinking property.

Examples of the crosslinking agent encompass compounds each having two or more functional groups exhibiting radical reactivity. Among the compounds each having two or more functional groups exhibiting radical reactivity, a bifunctional monomer having two functional groups is preferably used as the crosslinking agent. In other words, the base resin of the present expandable resin particles preferably includes, as the constitutional unit derived from the crosslinking agent, a bifunctional monomer unit, which is a constitutional unit derived from a bifunctional monomer. This configuration brings about an advantage of (a) allowing expandable resin particles to have excellent expandability, (b) allowing expanded particles produced by expanding the expandable resin particles to have an excellent shrinking property, and (c) allowing a foamed molded product produced by carrying out in-mold molding with respect to the expanded particles to have excellent surface quality.

Examples of the bifunctional monomer encompass (a) compounds prepared by esterifying, with acrylic acids or methacrylic acids, hydroxyl groups at both terminals of ethylene glycol such as ethylene glycol di(meth)acrylate, diethylene glycol di(meth)acrylate, or triethylene glycol di(meth)acrylate or of an oligomer of the ethylene glycol, (b) compounds prepared by esterifying, with an acrylic acid or a methacrylic acid, a hydroxyl group of dihydric alcohol such as neopentyl glycol di(meth)acrylate, hexanediol di(meth)acrylate, or butanediol di(meth)acrylate, and (c) an aryl compound having two alkenyl groups such as divinylbenzene. The bifunctional monomer is preferably hexanediol di(meth)acrylate such as 1,6-hexanediol diacrylate. This is because hexanediol di(meth)acrylate facilitates adjustment of a molecular weight of the base resin. The term "(meth)acrylate" herein means methacrylate and/or acrylate.

In the base resin, the content of the constitutional unit derived from the crosslinking agent is not less than 0.05 parts by weight and less than 0.20 parts by weight, preferably 0.05 parts by weight to 0.19 parts by weight, more preferably not less than 0.05 parts by weight and not more than 0.17 parts by weight, even more preferably not less than 0.08 parts by weight and 0.15 parts by weight, and still more preferably 0.08 parts by weight to 0.13 parts by weight, relative to the total amount of 100 parts by weight of the methyl methacrylate unit and the acrylic ester unit. The above configuration brings about an advantage of (a) allowing expandable resin particles to have excellent expandability, (b) allowing expanded particles produced by expanding the expandable resin particles to have an excellent shrinking property, and (c) allowing a foamed molded product produced by carrying out in-mold molding with respect to the expanded particles to have excellent surface quality. The above configuration further brings about an advantage of allowing the foamed molded product to have excellent strength and have a residue hardly remaining after burning.

The base resin of the present expandable resin particles may further include, as a constitutional unit, a constitutional unit derived from an aromatic vinyl compound. Examples of the aromatic vinyl compound encompass styrene, α-methylstyrene, paramethylstyrene, t-butylstyrene, and chlorostyrene. In a case where the base resin of the present expandable resin particles includes the constitutional unit derived from the aromatic vinyl compound, it is possible to obtain a foamed molded product having excellent strength.

A content of the constitutional unit derived from the aromatic vinyl compound in the base resin is preferably as low as possible in order to obtain a foamed molded product that has a residue hardly remaining after burning. In the base resin, the content of the constitutional unit derived from the aromatic vinyl compound is not more than 2.5 parts by weight, preferably less than 2.5 parts by weight, more preferably not more than 2.0 parts by weight, even more preferably not more than 1.5 parts by weight, still more preferably not more than 1.0 part by weight, and particularly preferably 0 part by weight, relative to 100 parts by weight of the base resin. That is, the base resin of the present expandable resin particles particularly preferably does not contain the constitutional unit derived from the aromatic vinyl compound.

(Blowing agent)

The blowing agent contained in the present expandable resin particles is not particularly limited. Examples of the blowing agent encompass (a) aliphatic hydrocarbons that are hydrocarbons having 3 to 5 carbon atoms, such as propane, isobutane, normal butane, isopentane, normal pentane, and neopentane and (b) volatile blowing agents such as hydrofluorocarbons having zero ozone depletion potential, e.g., difluoroethane and tetrafluoroethane. It is all right that these blowing agents may be used alone or in combination of two or more thereof.

The present expandable resin particles contain the blowing agent in an amount of preferably 5 parts by weight to 12 parts by weight, and more preferably 7 parts by weight to 10 parts by weight, relative to 100 parts by weight of the expandable methyl methacrylate resin particles. This configuration brings about an advantage of (i) being capable of providing expandable resin particles having sufficient expandability and (ii) eliminating the need for massive polymerization equipment.

(Other additive(s))

The present expandable resin particles may optionally contain other additive(s) in addition to the base resin and the blowing agent. Examples of the other additive(s) encompass a solvent, a plasticizer, a cell adjusting agent, a flame retardant, an auxiliary flame retarder, a heat radiation inhibitor, a pigment, a colorant, and an antistatic agent.

The solvent is not particularly limited, and is preferably a solvent having a boiling point of not less than 50°C. Examples of the solvent having a boiling point of not less than 50°C encompass (a) aliphatic hydrocarbons having 6 carbon atoms or more ($C_6$ or more aliphatic hydrocarbons), such as toluene, hexane, and heptane and (b) $C_6$ or more alicyclic hydrocarbons such as cyclohexane and cyclooctane. The solvent having a boiling point of not less than 50°C is preferably toluene and/or cyclohexane, in order to obtain expandable resin particles having excellent expandability. The present expandable resin particles contain the solvent in an amount of preferably 1.5 parts by weight to 3.0 parts by weight, relative to 100 parts by weight of the base resin. In a case (a) where the present expandable resin particles contain the solvent in an amount of not less than 1.5 parts by weight relative to 100 parts by weight of the base resin, it is possible to obtain expandable resin particles having sufficient expandability. In a case (b) where the present expandable resin particles contain the solvent in an amount of not more than 3.0 parts by weight relative to 100 parts by weight of the base resin, it is possible to obtain a foamed molded product in which surface expansion is prevented or reduced, that is, a foamed molded product which has excellent dimensional stability.

The plasticizer is not particularly limited, and is preferably a high boiling point plasticizer having a boiling point of not less than 200°C. Examples of the high boiling point plasticizer encompass (a) fatty acid glycerides such as stearic acid triglyceride, palmitic acid triglyceride, lauric acid triglyceride, stearic acid diglyceride, and stearic acid monoglyceride, (b) vegetable oils such as coconut oil, palm oil, and palm kernel oil, (c) fatty acid esters such as dioctyl adipate and dibutyl sebacate, and (d) organic hydrocarbons such as liquid paraffin and cyclohexane.

The present expandable resin particles contain the plasticizer in an amount of preferably 0.40 parts by weight to 4.00 parts by weight, preferably 0.50 parts by weight to 3.50 parts by weight, more preferably 0.60 parts by weight to 3.00 parts by weight, more preferably 0.70 parts by weight to 2.70 parts by weight, more preferably 0.80 parts by weight to 2.40 parts by weight, more preferably 0.90 parts by weight to 2.10 parts by weight, even more preferably 1.00 part by weight to 1.80 parts by weight, and particularly preferably 1.20 parts by weight to 1.50 parts by weight, relative to 100 parts by weight of the base resin. This configuration allows expandable resin particles to have excellent expandability, and brings about an advantage of being capable of providing expanded particles having an excellent shrinking property.

Examples of the cell adjusting agent encompass (a) aliphatic bisamides such as methylene-bis-stearic acid amide and ethylene-bis-stearic acid amide and (b) polyethylene wax.

(Weight average molecular weight)

The present expandable resin particles preferably have a weight average molecular weight in terms of polystyrene measured by gel permeation chromatography (GPC) of 100,000 to 400,000. With this configuration, it is possible to obtain a foamed molded product which has excellent surface quality and with which a residue hardly remains after burning.

(Volume-average particle size)

The present expandable resin particles have a volume-average particle size of 0.30 mm to 0.50 mm, preferably 0.35 mm to 0.45 mm, and more preferably 0.40 mm to 0.45 mm. The expandable resin particles that have a volume-average particle size of less than 0.30 mm cause a reduction in expandability during expansion and/or an increase in amount of blocking during expansion. The expandable resin particles that have a volume-average particle size of more than 0.50 mm cause expanded particles produced by expanding the expandable resin particles to have a poor filling property with respect to a narrow space when the expanded particles are filled into a molding machine. The narrow space in the molding machine corresponds to a thin part of a resulting foamed molded product. The volume-average particle size of expandable resin particles is herein defined as a particle diameter corresponding to a volume accumulation of 50%, the particle diameter being obtained by using a particle size analyzer (e.g., an image-processing-type Millitrack JPA particle size analyzer) to measure a particle diameter of expandable resin particles in terms of their volume and represent an obtained result by a cumulative distribution.

The present expandable resin particles have excellent expandability. Expandability of expandable resin particles is evaluated by a heating time of the expandable resin particles until the expandable resin particles reach expanded particles having a predetermined expanding ratio. Expandability of expandable resin particles is herein evaluated by a heating time obtained by carrying out the following (1) to (3) in order: (1) expandable methyl methacrylate resin particles are put into a steamer at 100°C, and the expandable methyl methacrylate resin particles are heated; (2) methyl methacrylate expanded particles obtained by expanding the expandable methyl methacrylate resin particles are taken out from the steamer at regular time intervals, and an expanding ratio of the methyl methacrylate expanded particles is measured; and (3) a time from when the expandable methyl methacrylate resin particles are put into the steamer until when methyl methacrylate expanded particles having an expanding ratio of 45 times are obtained, that is, a heating time of the expandable methyl methacrylate resin particles is measured. Assume here that the expanding ratio of the methyl methacrylate expanded particles is a value obtained by carrying out the following (1) to (3) in order: (1) 10 g of methyl methacrylate expanded particles are weighed out and put into a measuring cylinder of 1000 $cm^3$; (2) a volume of 10 g of the methyl methacrylate expanded particles is measured from a scale of the measuring cylinder; and (3) an expanding ratio of the methyl methacrylate expanded particles is calculated by the following formula:

...

$$\text{Expanding ratio } (cm^3/g) = \text{volume of expanded particles} (cm^3) / 10 \text{ g}.$$

Herein, the expanding ratio of the methyl methacrylate expanded particles is calculated by the above-described method, and therefore can also be referred to as a volume magnification. A unit of the expanding ratio is actually $cm^3/g$ based on the above formula. Note, however, that the unit of the expanding ratio is herein expressed as "time(s)" for convenience.

A shorter heating time means that expandable resin particles have more excellent expandability. The present expandable resin particles have a heating time, obtained by measuring as described earlier, of preferably less than 6 minutes, more preferably less than 5 minutes and 30 seconds, more preferably less than 5 minutes, even more preferably less than 4 minutes and 30 seconds, and particularly preferably less than 4 minutes. With this configuration, expandable resin particles can provide a foamed molded product that has more excellent surface quality.

[3. Method for producing expandable methyl methacrylate resin particles]

A method for producing expandable methyl methacrylate resin particles in accordance with an embodiment of the present invention includes: (a) a copolymerization step of copolymerizing a monomer mixture containing a methyl methacrylate monomer and an acrylic ester monomer to obtain a copolymer; and (b) a blowing agent impregnation step of impregnating a blowing agent in the copolymer thus obtained. The copolymerization step further includes: (a) an initiation step of initiating copolymerization of a monomer mixture in the presence of 0.20 parts by weight to 1.20 parts by weight of a first poorly water-soluble inorganic salt relative to 100 parts by weight of the monomer mixture; and (b) an addition step of adding, to a reaction mixture, 0.08 parts by weight to 0.50 parts by weight of a second poorly water-soluble inorganic salt relative to 100 parts by weight of the monomer mixture after the initiation step at a point in time when a polymerization conversion rate is 35% to 70%. In the copolymerization step, an amount of the methyl methacrylate monomer to be used is 90.0 parts by weight to 99.0 parts by weight and an amount of the acrylic ester monomer to be used is 1.0 part by weight to 10.0 parts by weight, relative to a total amount of 100 parts by weight of the methyl methacrylate monomer and the acrylic ester monomer to be used.

The "poorly water-soluble inorganic salt" herein refers to an inorganic salt having a solubility of not more than 0.1 mg/ml in water of 25°C.

A "method for producing expandable methyl methacrylate resin particles in accordance with an embodiment of the present invention" may be hereinafter referred to as "the present production method".

The present production method has the above-described configuration, and therefore can provide expandable methyl methacrylate resin particles capable of providing a foamed molded product which has excellent surface quality and with which a residue hardly remains after burning. Furthermore, the present production method has the above-described configuration, and therefore can advantageously provide the present expandable resin particles described in [2. Expandable methyl methacrylate resin particles]. That is, the present production method is suitably applicable to produce the present expandable resin particles described in [2. Expandable methyl methacrylate resin particles]. Note that the "copolymer" in the present production method corresponds to the "base resin" included in the expandable resin particles described in [2. Expandable methyl methacrylate resin particles].

The following will describe steps related to the present production method. Except for matters described in detail below, the description in [2. Expandable methyl methacrylate resin particles] is cited as appropriate. The present expandable resin particles described in [2. Expandable methyl methacrylate resin particles] are preferably produced by the present production method, but may be alternatively produced by a method that is not the present production method. That is, a method for producing the present expandable resin particles is not limited to such an aspect of the present production method as described below.

(3-1. Copolymerization step)

The copolymerization step of the present production method may be suspension polymerization according to which a monomer mixture is polymerized in an aqueous suspension. Hereinafter, the copolymer (base resin) obtained in the copolymerization step may simply be referred to as "resin particles".

The "aqueous suspension" herein refers to a liquid prepared by dispersing, with a stirrer and/or the like, monomer droplets and/or resin particles in water or an aqueous solution. In the aqueous suspension, (a) a water-soluble surfactant and monomers may be dissolved, or (b) a dispersion agent, a polymerization initiator, a chain transfer agent, a crosslinking agent, a cell adjusting agent, a flame retardant, a solvent, a plasticizer, and or the like, each of which is waterinsoluble, may be dispersed together with the monomers.

A weight ratio between (i) the monomers and polymer (resin) and (ii) the water or aqueous solution in the aqueous suspension is preferably 1.0/0.6 to 1.0/3.0, in terms of a ratio of a resulting methyl methacrylate resin to the water or aqueous solution. Note that the "aqueous solution" herein means a solution made of water and a component that is not the methyl methacrylate resin.

The copolymerization step includes the initiation step of initiating copolymerization of a monomer mixture in the presence of 0.20 parts by weight to 1.20 parts by weight of a first poorly water-soluble inorganic salt relative to 100 parts by weight of the monomer mixture. The initiation step is, for example, a step of initiating copolymerization of a monomer mixture with use of, for example, an aqueous suspension containing (a) water, (b) a monomer mixture containing a methyl methacrylate monomer and an acrylic ester monomer, (c) 0.20 parts by weight to 1.20 parts by weight of a first poorly water-soluble inorganic salt relative to 100 parts by weight of the monomer mixture, (d) a crosslinking agent, and optionally (e) a polymerization initiator, a surfactant, a dispersion agent that is not a poorly water-soluble inorganic salt, a chain transfer agent, a cell adjusting agent, a flame retardant, a solvent and a plasticizer, and/or the like.

A "timing before a polymerization reaction is initiated" may be herein referred to as an "initial stage of polymerization". The first poorly water-soluble inorganic salt to be blended (added) into the aqueous suspension in the initiation step, and the polymerization initiator to be optionally blended can be said to be a substance (raw material) to be used at the initial stage of polymerization.

In the initiation step, the first poorly water-soluble inorganic salt can function as a dispersion agent. Examples of the first poorly water-soluble inorganic salt to be used in the initiation step, i.e., the initial stage of polymerization encompass tricalcium phosphate, magnesium pyrophosphate, hydroxyapatite, and kaolin.

In addition, in the initiation step, (a) a water-soluble polymer such as polyvinyl alcohol, methylcellulose, polyacrylamide, or polyvinyl pyrrolidone and/or (b) an anionic surfactant such as sodium α-olefin sulfonate or sodium dodecylbenzene sulfonate may be used in combination with the first poorly water-soluble inorganic salt.

The first poorly water-soluble inorganic salt to be used in the initiation step is preferably tricalcium phosphate, from the viewpoint of protection of the resin particles and/or monomer droplets. The initiation step is preferably a step of initiating copolymerization of a monomer mixture in the presence of tricalcium phosphate that is a poorly water-soluble inorganic salt and sodium α-olefin sulfonate that is an anionic surfactant, from the viewpoint of dispersion stability of droplets.

The initiation step is preferably a step of initiating copolymerization of a monomer mixture in the presence of preferably 0.20 parts by weight to 1.20 parts by weight, more preferably 0.20 parts by weight to 1.10 parts by weight, and even more preferably 0.40 parts by weight to 1.10 parts by weight of the first poorly water-soluble inorganic salt, relative to 100 parts by weight of the monomer mixture. In a case where copolymerization of a monomer mixture in the presence of not less than 0.20 parts by weight of the first poorly water-soluble inorganic salt relative to 100 parts by weight of the monomer mixture is initiated, there is no fear that resulting expandable resin particles might have a too large volume-average particle size. In a case where copolymerization of a monomer mixture in the presence of not more than 1.10 parts by weight of the first poorly water-soluble inorganic salt relative to 100 parts by weight of the monomer mixture is initiated, there is no fear that many fine particles of expandable resin particles might occur. In other words, by initiating copolymerization of a monomer mixture in the presence of the first poorly water-soluble inorganic salt in an amount in the above-described range, expandable resin particle having a desired volume-average particle size can be obtained at a high yield.

In the initiation step, in a case where a water-soluble polymer and/or an anionic surfactant is/are used in combination with the first poorly water-soluble inorganic salt, a concentration of the water-soluble polymer and/or the anionic surfactant in the aqueous suspension is preferably 30 ppm to 100 ppm, on the basis of a concentration of the monomer mixture.

The copolymerization step includes the addition step of adding, to the reaction mixture, 0.08 parts by weight to 0.50 parts by weight of the second poorly water-soluble inorganic salt relative to 100 parts by weight of the monomer mixture after the initiation step at a point in time when the polymerization conversion rate is 35% to 70%.

A "timing after the polymerization reaction is initiated" may be herein referred to as "during polymerization". In the addition step, the second poorly water-soluble inorganic salt to be added to the reaction mixture can be said to be a substance (raw material) used during polymerization.

In a case where the monomer mixture is polymerized (copolymerized) in the copolymerization step according to suspension polymerization, the reaction mixture in the addition step can also be referred to as an aqueous suspension.

In the addition step, the second poorly water-soluble inorganic salt can function as a dispersion agent. Examples of the second poorly water-soluble inorganic salt to be used in the addition step, i.e., during polymerization encompass the substances already listed as the examples of the first poorly water-soluble inorganic salt. The second poorly water-soluble inorganic salt is preferably one or more kinds selected from the group consisting of tricalcium phosphate, hydroxyapatite, and kaolin, and is more preferably tricalcium phosphate. With this configuration, it is possible to prevent coalescence of the resin particles at the time of and after addition of the dispersion agent, thereby making it possible to yield resin particles having a target particle diameter.

The adding step is preferably a step of adding, to the reaction mixture, preferably 0.08 parts by weight to 0.50 parts by weight, more preferably 0.10 parts by weight to 0.50 parts by weight, more preferably 0.10 parts by weight to 0.40 parts by weight, even more preferably 0.10 parts by weight to 0.30 parts by weight, and particularly preferably 0.10 parts by weight to 0.20 parts by weight of the second poorly water-soluble inorganic salt, relative to 100 parts by weight of the monomer mixture after the initiation step at a point in time when the polymerization conversion rate is 35% to 70%. In the addition step, in a case where not less than 0.08 parts by weight of the second poorly water-soluble inorganic salt relative to 100 parts by weight of the monomer mixture is added to the reaction mixture, there is no fear that resulting expandable resin particles might have a too large volume-average particle size. In the addition step, in a case where not more than 0.50 parts by weight of the second poorly water-soluble inorganic salt relative to 100 parts by weight of the monomer mixture is added to the reaction mixture, production cost increases due to excessive use of the poorly water-soluble inorganic salt. In other words, in a case where the second poorly water-soluble inorganic salt in an amount in the above-described range is added to the reaction mixture in the addition step, expandable resin particle having a desired volume-average particle size can be obtained at low production cost.

The addition step is preferably configured such that the second poorly water-soluble inorganic salt is added to the reaction mixture preferably at a point in time when the polymerization conversion rate is 35% to 70%, and more preferably at a point in time when the polymerization conversion rate is 40% to 50%. With this configuration, expandable resin particles having a desired volume-average particle size can be obtained. A method in which the polymerization conversion rate is herein measured will be specifically described in Examples below.

The copolymerization step is preferably carried out at two or more stages by changing a polymerization temperature. For convenience, two polymerization steps that differ in polymerization temperature are hereinafter referred to as a first polymerization step and a second polymerization step, respectively. It can also be said that the copolymerization step preferably includes the first polymerization step and the second polymerization step that differ in polymerization temperature and that are continuous.

The copolymerization step preferably includes, for example, (a) the first polymerization step that is carried out at a polymerization temperature of 70°C to 90°C and with use of a low temperature decomposition type initiator and (b) the second polymerization step that is carried out subsequently to the first polymerization step and that is carried out at a higher polymerization temperature (e.g., 90°C to 110°C) than in the first polymerization step and with use of a high temperature decomposition type initiator. In the copolymerization step, it is preferable that a major polymerization reaction take place in the above-described first polymerization step and that a remaining monomer be reduced in the above-described second polymerization step.

As the polymerization initiator, a radical generating polymerization initiator generally used to produce a thermoplastic polymer can be used. Examples of a typical radical generating polymerization initiator encompass (a) organic peroxides such as benzoyl peroxide, lauroyl peroxide, t-butyl peroxybenzoate, isopropyl-t-butyl peroxycarbonate, butyl perbenzoate, t-butyl peroxy-2-ethylhexanoate, t-butyl perpivalate, t-butyl peroxy isopropyl carbonate, di-t-butyl peroxy hexahydro terephthalate, 1,1-bis(t-butyl peroxy)-3,3,5-trimethylcyclohexane, 1,1-bis(t-amylperoxy)-3,3,5-trimethylcyclohexane, 1,1-bis(t-butyl peroxy) cyclohexane, t-butyl peroxy-2-ethylhexyl monocarbonate and (b) azo compounds such as azobis isobutyronitrile and azobis dimethylvaleronitrile. These polymerization initiators may be used alone or in combination of two or more thereof.

Among the radical generating polymerization initiators listed above, (a) benzoyl peroxide, lauroyl peroxide, t-butyl perpivalate, di-t-butyl peroxy hexahydro terephthalate, azobis isobutyronitrile, and azobis dimethylvaleronitrile are low temperature decomposition type polymerization initiators, and (b) t-butyl peroxybenzoate, isopropyl-t-butyl peroxycarbonate, butyl perbenzoate, t-butyl peroxy-2-ethylhexanoate, t-butyl peroxy isopropyl carbonate, 1,1-bis(t-butyl peroxy)-3,3,5-trimethylcyclohexane, 1,1-bis(t-amylperoxy)-3,3,5-trimethylcyclohexane, 1,1-bis(t-butyl peroxy) cyclohexane, and t-butyl peroxy-2-ethylhexyl monocarbonate are high temperature decomposition type polymerization initiators.

The amount of the polymerization initiator to be used is preferably set so that the sum of the amount of the polymerization initiator used in the first polymerization step and the amount of the polymerization initiator used in the second polymerization step is, for example, not less than 0.1 parts by weight and not more than 0.5 parts by weight relative to 100 parts by weight of the monomer mixture. With this configuration, it is possible to obtain expandable resin particles having more excellent expandability.

The initiation step may be (a) a step of initiating copolymerization of the monomer mixture in the presence of the first poorly water-soluble inorganic salt, the low temperature decomposition type polymerization initiator, and the high temperature decomposition type polymerization initiator, or (b) a step of initiating copolymerization of the monomer mixture in the presence of the first poorly water-soluble inorganic salt and the low temperature decomposition type polymerization initiator. In a case where the initiation step is the step of initiating copolymerization of the monomer mixture in the presence of the first poorly water-soluble inorganic salt and the low temperature decomposition type polymerization initiator, the high temperature decomposition type polymerization initiator may be added to the reaction mixture (aqueous suspension) after the initiation step, i.e., during polymerization.

In the copolymerization step, it is preferable to use a chain transfer agent. The chain transfer agent is not particularly limited, and it is possible to use a known substance usable for polymerization of the methyl methacrylate resin. Examples of the chain transfer agent encompass (a) monofunctional chain transfer agents such as alkylmercaptans and thioglycolates and (b) polyfunctional chain transfer agents prepared by esterifying, with thioglycollic acid or 3-mercaptopropionic acid, hydroxyl groups of polyhydric alcohols such as ethylene glycol, neopentyl glycol, trimethylolpropane, and sorbitol. Examples of the alkylmercaptans encompass n-octyl mercaptan, n-dodecyl mercaptan, and t-dodecyl mercaptan. The amount of the chain transfer agent to be used is preferably not less than 0.1 parts by weight and less than 0.5 parts by weight, relative to 100 parts by weight of the base resin, for example.

(3-2. Blowing agent impregnation step)

In the blowing agent impregnation step, by impregnating a blowing agent in methyl methacrylate resin particles, which are the copolymer obtained in the copolymerization step, it is possible to obtain expandable methyl methacrylate resin particles.

The blowing agent impregnation step can be carried out at any point in time, and may be carried out, for example, together with the second polymerization step or after the second polymerization step.

The blowing agent impregnation step is preferably configured such that the blowing agent is impregnated in the obtained copolymer at a point in time when a polymerization conversion rate at which the monomers are polymerized to form a copolymer is 80% to 95%. In a case where the blowing agent is impregnated in the copolymer at a point in time when the polymerization conversion rate is not less than 80%, the blowing agent is moderately impregnated in an inner part of the copolymer. Thus, there is no fear that agglomeration of copolymers due to softening of the copolymer might occur, and a high production yield is achieved. In a case where the blowing agent is impregnated in the copolymer at a point in time when the polymerization conversion rate is not more than 95%, the blowing agent is sufficiently impregnated into the inner part of the copolymer. Thus, there is no fear that a double bubble structure (hard core) might be formed in expanded particles obtained by expanding resulting expandable resin particles. As a result, by carrying out in-mold molding with respect to the expanded particles, it is possible to obtain a foamed molded product having excellent surface quality.

In the blowing agent impregnation step, the amount of the blowing agent to be impregnated in the copolymer methyl methacrylate resin particles, which are the copolymer, includes a preferable aspect and is identical to the amount of the blowing agent contained in the expandable resin particles, described in (Blowing agent) of [2. Expandable methyl methacrylate resin particles]. With this configuration, it is possible to not only obtain expandable resin particles having sufficient expandability, but also safely produce expandable resin particles without causing agglomeration of copolymers in the blowing agent impregnation step.

In the blowing agent impregnation step, a treatment temperature (also referred to as an "impregnation temperature") and a treatment time (also referred to as an "impregnation time") during impregnation of the blowing agent in the copolymer are not particularly limited.

In the blowing agent impregnation step, the impregnation temperature during impregnation of the blowing agent in the copolymer is preferably not less than 95°C and not more than 120°C, and more preferably not less than 100°C and not more than 117°C. In a case where the impregnation temperature is not less than 95°C, the blowing agent is sufficiently impregnated into the inner part of the copolymer. Thus, there is no fear that a double bubble structure (hard core) might be formed in expanded particles obtained by expanding resulting expandable resin particles. As a result, by carrying out in-mold molding with respect to the expanded particles, it is possible to obtain a foamed molded product having excellent surface quality. In a case where the impregnation temperature is not more than 120°C, a polymerization machine has a not too high internal pressure. Thus, expandable resin particles capable of providing expanded particles having a uniform bubble structure can be obtained without any need for impregnation equipment, which is heavy equipment, capable of withstanding a large pressure.

In the present production method, in a case where a solvent (e.g., a solvent having a boiling point of not less than 50°C) is used, the solvent is preferably added to the reaction mixture (aqueous suspension) immediately before or simultaneously with the blowing agent impregnation step.

[4. Methyl methacrylate expanded particles]

Methyl methacrylate expanded particles in accordance with an embodiment of the present invention are expanded particles obtained by expanding the expandable methyl methacrylate resin particles described in [2. Expandable methyl methacrylate resin particles] or the expandable methyl methacrylate resin particles produced by the production method described in [3. Method for producing expandable methyl methacrylate resin particles].

The "methyl methacrylate expanded particles in accordance with an embodiment of the present invention" may be hereinafter referred to as "the present expanded particles".

The present expandable resin particles can be transformed into expanded particles by a common expansion method. Specifically, methyl methacrylate expanded particles can be obtained by carrying out, for example, the following operations (1) to (3) in order: (1) expandable methyl methacrylate resin particles are put into a container provided with a stirrer; (2) the expandable methyl methacrylate resin particles are heated by a heat source such as water vapor; and (3) the expandable methyl methacrylate resin particles are expanded by the above (2) to attain a desired expanding ratio, so that methyl methacrylate expanded particles are obtained.

Expansion of expandable methyl methacrylate resin particles can also be said to be expansion that is preliminarily carried out so that a methyl methacrylate foamed molded product (described later) is obtained from the expandable methyl methacrylate resin particles. Thus, expansion of expandable methyl methacrylate resin particles may be referred to as "pre-expansion", and methyl methacrylate expanded particles may be referred to as "methyl methacrylate pre-expanded particles".

The present expanded particles have an excellent filling property. The filling property of expanded particles is evaluated, when the expanded particles are put into a container having a predetermined shape and a predetermined size, by a volume of the expanded particles that have been actually put into the container. The filling property of expanded particles is herein evaluated by a volume obtained by carrying out the following (1) to (3) in order: (1) methyl methacrylate expanded particles having an expanding ratio of 45 times are put into a container having a length of 120 mm, a width of 80 mm, and a thickness of 6 mm; (2) the methyl methacrylate expanded particles in the container are put (transferred) into a measuring cylinder; and (3) a volume of the methyl methacrylate expanded particles is measured from a scale of the measuring cylinder.

The volume that is larger means that expanded particles have an excellent filling property. The present expanded particles have a volume of preferably not less than 50 cm$^3$, more preferably not less than 51 cm$^3$, and particularly preferably not less than 52 cm$^3$, the volume having been obtained by being measured as described earlier. With this configuration, expanded particles are capable of providing a foamed molded product that has more excellent surface quality.

[5. Methyl methacrylate foamed molded product]

A methyl methacrylate foamed molded product in accordance with an embodiment of the present invention is a foamed molded product obtained by carrying out in-mold molding with respect to the methyl methacrylate expanded particles described in [4. Methyl methacrylate expanded particles].

The "methyl methacrylate foamed molded product in accordance with an embodiment of the present invention" may be hereinafter referred to as "the present foamed molded product".

The present expanded particles can be molded into a foamed molded product by a common in-mold molding method. Specifically, a methyl methacrylate foamed molded product can be obtained by carrying out, for example, the following operations (1) to (3) in order: (1) methyl methacrylate expanded particles are charged in a mold that can be closed but cannot be sealed; (2) the methyl methacrylate expanded particles are heated by water vapor; and (3) the methyl methacrylate expanded particles are fused to each other by the above (2), so that a methyl methacrylate foamed molded product is obtained.

The methyl methacrylate foamed molded product in accordance with an embodiment of the present invention has excellent surface quality. The methyl methacrylate foamed molded product in accordance with an embodiment of the present invention is advantageous in that a residue hardly remains in a case where the methyl methacrylate foamed molded product is buried in casting sand, and a molten metal is poured to the methyl methacrylate foamed molded product so that the methyl methacrylate foamed molded product is replaced with the metal. For these reasons, the methyl methacrylate foamed molded product in accordance with an embodiment of the present invention can be suitably used as an evaporative pattern.

[6. Evaporative pattern]

An evaporative pattern in accordance with an embodiment of the present invention includes the methyl methacrylate foamed molded product described in [5. Methyl methacrylate foamed molded product).

The evaporative pattern in accordance with an embodiment of the present invention has excellent surface quality and has a residue hardly remaining after burning. Therefore, the evaporative pattern can be suitably used for various types of metal casting.

An embodiment of the present invention may be configured as follows.

(1) Expandable methyl methacrylate resin particles containing: a base resin including, as constitutional units, a methyl methacrylate unit, an acrylic ester unit, and a constitutional unit derived from a crosslinking agent; and a blowing agent, the expandable methyl methacrylate resin particles having a volume-average particle size of 0.30 mm to 0.50 mm, in the base resin, (a) a content of the methyl methacrylate unit being 90.0 parts by weight to 99.0 parts by weight and a content of the acrylic ester unit being 1.0 part by weight to 10.0 parts by weight, relative to a total amount of 100 parts by weight of the methyl methacrylate unit and the acrylic ester unit, (b) a content of the constitutional unit derived from the crosslinking agent being not less than 0.05 parts by weight and less than 0.20 parts by weight relative to the total amount of 100 parts by weight of the methyl methacrylate unit and the acrylic ester unit, and (c) a content of a constitutional unit derived from an aromatic vinyl compound being not more than 2.5 parts by weight relative to 100 parts by weight of the base resin.

(2) The expandable methyl methacrylate resin particles recited in (1), wherein the acrylic ester is butyl acrylate.

(3) Methyl methacrylate expanded particles produced by expanding expandable methyl methacrylate resin particles recited in (1) or (2).

(4) A methyl methacrylate foamed molded product produced by carrying out in-mold molding with respect to methyl methacrylate expanded particles recited in (3).

(5) An evaporative pattern including a methyl methacrylate foamed molded product recited in (4).

Examples

The following will show Examples and Comparative Examples. However, an aspect of the present invention is not limited to them.

(Polymerization conversion rate of expandable methyl methacrylate resin particles)

During polymerization, a sample was taken from an aqueous suspension, and the aqueous suspension thus taken as a sample was filtered. The weight of a resin component remaining on filter paper was measured, and the weight thus measured was obtained as a weight before heating. Next, a polymerization inhibitor was added to the resin component, and then the resin component was heated at 150°C for 30 minutes, so that a volatile component was removed therefrom. Thereafter, the weight of a resulting resin component was measured, and the weight thus measured was obtained as a weight after heating. A polymerization conversion rate was calculated according to the following formula:

$$\text{Polymerization conversion rate (\%)} = (\text{weight after heating} / \text{weight before heating}) \times 100.$$

(Volume-average particle size of expandable methyl methacrylate resin particles)

An image-processing-type Millitrack JPA particle size analyzer was used to measure a particle diameter of the expandable methyl methacrylate resin particles in terms of their volume. An obtained result was represented by a cumulative distribution, and a particle diameter corresponding to a volume accumulation of 50% was obtained as a volume-average particle size.

(Expandability of expandable methyl methacrylate resin particles)

The following (1) to (3) were carried out in order: (1) expandable methyl methacrylate resin particles were put into a steamer at 100°C, and the expandable methyl methacrylate resin particles were heated; (2) methyl methacrylate expanded particles obtained by expanding the expandable methyl methacrylate resin particles were taken out from the steamer at regular time intervals, and an expanding ratio of the methyl methacrylate expanded particles was measured; and (3) a time from when the expandable methyl methacrylate resin particles were put into the steamer until when methyl methacrylate expanded particles having an expanding ratio of 45 times were obtained, that is, a heating time of the expandable methyl methacrylate resin particles was measured. Expandability of the expandable methyl methacrylate resin particles was evaluated from the measured heating time on the basis of the following criteria.

Excellent (E): The heating time is less than 4 minutes.
Good (G): The heating time is not less than 4 minutes and less than 6 minutes.
Poor (P): The heating time is not less than 6 minutes.

Note here that the expanding ratio of the methyl methacrylate expanded particles was obtained by carrying out the following (1) to (3) in order: (1) 10 g of methyl methacrylate expanded particles were weighed out and put into a measuring cylinder of 1000 cm$^3$; (2) a volume of 10 g of the methyl methacrylate expanded particles was measured from a scale of the measuring cylinder; and (3) an expanding ratio of the methyl methacrylate expanded particles was calculated by the following formula:

$$\mathrm{Expanding\ ratio\ (cm^3/g) = volume\ of\ expanded\ particles}$$

$$\mathrm{(cm^3)\ /\ 10\ g.}$$

(Filling property of methyl methacrylate expanded particles)

The following (1) to (3) were carried out in order: (1) methyl methacrylate expanded particles having an expanding ratio of 45 times were put into a container having a length of 120 mm, a width of 80 mm, and a thickness of 6 mm; (2) the methyl methacrylate expanded particles in the container were put (transferred) into a measuring cylinder; and (3) a volume of the methyl methacrylate expanded particles was measured from a scale of the measuring cylinder. A filling property of the methyl methacrylate expanded particles was evaluated from the measured volume on the basis of the following criteria.

Excellent (E): The volume is not less than 52 $cm^3$.
Good (G): The volume is not less than 50 $cm^3$ and less than 52 $cm^3$.
Poor (P): The volume is less than 50 $cm^3$.

(Shrinking property of methyl methacrylate expanded particles)

Expandable methyl methacrylate resin particles were expanded with use of a pressure-type pre-expansion machine (available from Obiraki Industry Co., Ltd., "BHP") under a blowing vapor pressure of 0.12 MPa to 0.16 MPa so as to obtain methyl methacrylate expanded particles having an expanding ratio of 45 times. Such an operation resulted in obtainment of methyl methacrylate expanded particles having an expanding ratio of 45 times. The obtained methyl methacrylate expanded particles were left to stand in a room temperature (approximately 23°C) environment for one day, and then a degree of shrinkage in surface of the methyl methacrylate expanded particles was observed. A shrinking property of the methyl methacrylate expanded particles was evaluated from a result of observation of the surface of the methyl methacrylate expanded particles on the basis of the following criteria.

Excellent (E): Visually, no wrinkles are observed on the surface of the methyl methacrylate expanded particles, and the surface is shiny.
Good (G): Visually, no wrinkles are observed on the surface of the methyl methacrylate expanded particles, and the surface is not observed to be shiny.
Poor (P): Visually, wrinkles are observed on the surface of the methyl methacrylate expanded particles.

(Surface quality of methyl methacrylate foamed molded product)

A state of a surface of a methyl methacrylate foamed molded product was visually observed. Surface quality of the methyl methacrylate foamed molded product was evaluated from a result of the observation on the basis of the following criteria.

Excellent (E): The surface has few inter-particle dimples thereon, that is, the surface is very beautiful.
Good (G): The surface has a small number of inter-particle dimples thereon, that is, the surface is beautiful.
Poor (P): The surface has a large number of inter-particle dimples thereon, that is, the surface has a poor appearance.

(Evaluation of residue remaining after burning of methyl methacrylate foamed molded product)

Approximately 7 g (approximately 300 $cm^3$) of a methyl methacrylate foamed molded product was ignited with a gas burner so as to burn the methyl methacrylate foamed molded product. Then, it was visually observed to what degree soot had been produced after the burning. A residue remaining after burning of the methyl methacrylate foamed molded product was evaluated from a result of the observation of soot on the basis of the following criteria.

Excellent (E): Hardly any soot has been produced.
Good (G): A slight amount of soot has been produced.
Poor (P): A large amount of soot has been produced.

(Example 1)

A 6 L-autoclave with a stirrer was charged with 150 parts by weight of water, 0.53 parts by weight of tricalcium phosphate as a first poorly water-soluble inorganic salt, 0.0075 parts by weight of sodium $\alpha$-olefin sulfonate, 0.08 parts by weight of lauroyl peroxide, 0.1 parts by weight of 1,1-bis(t-butyl peroxy)cyclohexane, 0.1 parts by weight of 1,6-hexanediol diacrylate as a crosslinking agent, and 0.24 parts by weight of n-dodecyl mercaptan, so that a mixed solution containing the first poorly water-soluble inorganic salt was prepared. Thereafter, (a) 95 parts by weight of methyl methacrylate and 5 parts by weight of butyl acrylate as a monomer mixture and (b) 1 part by weight of toluene were charged into the mixed solution, so that an aqueous suspension was prepared. Then, the aqueous suspension was heated to a temperature of 80°C so that polymerization was initiated, i.e., an initiation step was carried out. A polymerization conversion rate measured after 1 hour and 45 minutes had elapsed since the initiation of polymerization (after the initiation step) was 43%. After 1 hour and 45 minutes had elapsed since the initiation of polymerization (after the initiation step), 0.12 parts by weight of tricalcium phosphate as a second poorly water-soluble inorganic salt was added to a reaction mixture (the aqueous suspension), so that an addition step was carried out.

After another 2 hours and 35 minutes had elapsed since then, 1.5 parts by weight of cyclohexane and 9 parts of normal rich butane (a weight ratio between normal butane and isobutane (normal butane / isobutane) is 70/30 in the normal rich butane) as a blowing agent were charged into the aqueous suspension. Thereafter, the aqueous suspension was heated to a temperature of 101°C. Then, by maintaining the temperature of the aqueous suspension at 101°C for 10 hours, polymerization and impregnation of the blowing agent in a copolymer (a copolymerization step and a blowing agent impregnation step) were carried out. Thereafter, the water-washed suspension was cooled. After the water-washed suspension was cooled, a resulting product was cleaned, dehydrated, and dried. Consequently, expandable methyl methacrylate resin particles were obtained.

The expandable methyl methacrylate resin particles thus obtained were sieved with sieves having respective mesh sizes of 0.355 mm and 0.600 mm. Through such an operation, expandable methyl methacrylate resin particles having a particle diameter of 0.355 mm to 0.600 mm were collected.

The expandable methyl methacrylate resin particles thus obtained were expanded with use of a pressure-type pre-expansion machine (available from Obiraki Industry Co., Ltd., "BHP"), so that methyl methacrylate expanded particles having an expanding ratio of 45 times were obtained.

Then, a KR-57 molding machine and a mold having a length of 450 mm, a width of 300 mm, and a thickness of 10 mm were used to carry out in-mold molding with respect to the methyl methacrylate expanded particles thus obtained, so that a methyl methacrylate foamed molded product was obtained.

The volume-average particle size and expandability of expandable methyl methacrylate resin particles, the filling property and the shrinking property of methyl methacrylate expanded particles, and the surface quality and a residue remaining after burning of a methyl methacrylate foamed molded product were evaluated in accordance with the above-described method. The result of the evaluation is shown in Table 1.

(Example 2)

The same operations as those in Example 1 were carried out, except that the monomer mixture to be used was changed to 97 parts by weight of methyl methacrylate and 3 parts by weight of butyl acrylate. As a result, expandable resin particles, expanded particles, and a foamed molded product were obtained. Evaluation was carried out with respect to each evaluation item in the same manner as in Example 1. The result of the evaluation is shown in Table 1.

(Example 3)

The same operations as those in Example 1 were carried out, except that the monomer mixture to be used was changed to 93 parts by weight of methyl methacrylate and 7 parts by weight of butyl acrylate. As a result, expandable resin particles, expanded particles, and a foamed molded product were obtained. Evaluation was carried out with respect to each evaluation item in the same manner as in Example 1. The result of the evaluation is shown in Table 1.

(Example 4)

The same operations as those in Example 1 were carried out, except that the monomer mixture to be used was changed to 94.5 parts by weight of methyl methacrylate and 5.5 parts by weight of methyl acrylate. As a result, expandable resin particles, expanded particles, and a foamed molded product were obtained. Evaluation was carried out with respect to each evaluation item in the same manner as in Example 1. The result of the evaluation is shown in Table 1.

(Example 5)

The same operations as those in Example 1 were carried out, except that the amount of the crosslinking agent 1,6-hexanediacrylate to be used was changed to 0.06 parts by weight. As a result, expandable resin particles, expanded particles, and a foamed molded product were obtained. Evaluation was carried out with respect to each evaluation item in the same manner as in Example 1. The result of the evaluation is shown in Table 1.

(Example 6)

The same operations as those in Example 1 were carried out, except that the amount of the crosslinking agent 1,6-hexanediacrylate to be used was changed to 0.18 parts by weight. As a result, expandable resin particles, expanded particles, and a foamed molded product were obtained. Evaluation was carried out with respect to each evaluation item in the same manner as in Example 1. The result of the evaluation is shown in Table 1.

(Example 7)

The same operations as those in Example 1 were carried out, except that the amount of the first poorly water-soluble inorganic salt tricalcium phosphate to be used was changed to 1.05 parts by weight in the initiation step. As a result, expandable resin particles, expanded particles, and a foamed molded product were obtained. Evaluation was carried out with respect to each evaluation item in the same manner as in Example 1. The result of the evaluation is shown in Table 1.

(Example 8)

The same operations as those in Example 1 were carried out, except that the amount of the first poorly water-soluble inorganic salt tricalcium phosphate to be used was changed to 0.41 parts by weight in the initiation step. As a result, expandable resin particles, expanded particles, and a foamed molded product were obtained. Evaluation was carried out with respect to each evaluation item in the same manner as in Example 1. The result of the evaluation is shown in Table 1.

(Example 9)

The same operations as those in Example 1 were carried out, except that 1.0 part by weight of styrene was further used as an aromatic vinyl compound. As a result, expandable resin particles, expanded particles, and a foamed molded product were obtained. Evaluation was carried out with respect to each evaluation item in the same manner as in Example 1. The result of the evaluation is shown in Table 1.

(Comparative Example 1)

The same operations as those in Example 1 were carried out, except that the monomer mixture to be used was changed to 100 parts by weight of methyl methacrylate and 0 part by weight of butyl acrylate. As a result, expandable resin particles, expanded particles, and a foamed molded product were obtained. Evaluation was carried out with respect to each evaluation item in the same manner as in Example 1. The result of the evaluation is shown in Table 2.

(Comparative Example 2)

The same operations as those in Example 1 were carried out, except that the monomer mixture to be used was changed to 88 parts by weight of methyl methacrylate and 12 parts by weight of butyl acrylate. As a result, expandable resin particles, expanded particles, and a foamed molded product were obtained. Evaluation was carried out with respect to each evaluation item in the same manner as in Example 1. The result of the evaluation is shown in Table 2.

(Comparative Example 3)

The same operations as those in Example 1 were carried out, except that the amount of the crosslinking agent 1,6-hexanediacrylate to be used was changed to 0 part by weight. As a result, expandable resin particles, expanded particles, and a foamed molded product were obtained. Evaluation was carried out with respect to each evaluation item in the same manner as in Example 1. The result of the evaluation is shown in Table 2.

(Comparative Example 4)

The same operations as those in Example 1 were carried out, except that the amount of the crosslinking agent 1,6-hexanediacrylate to be used was changed to 0.22 parts by weight. As a result, expandable resin particles, expanded particles, and a foamed molded product were obtained. Evaluation was carried out with respect to each evaluation item in the same manner as in Example 1. The result of the evaluation is shown in Table 2.

(Comparative Example 5)

The same operations as those in Example 1 were carried out, except that the amount of the first poorly water-soluble inorganic salt tricalcium phosphate to be used was changed to 0.17 parts by weight in the initiation step. As a result, expandable resin particles, expanded particles, and a foamed molded product were obtained. Evaluation was carried out with respect to each evaluation item in the same manner as in Example 1. The result of the evaluation is shown in Table 2.

(Comparative Example 6)

The same operations as those in Example 1 were carried out, except that 3.0 parts by weight of styrene was further used as an aromatic vinyl compound. As a result, expandable resin particles, expanded particles, and a foamed molded product were obtained. Evaluation was carried out with respect to each evaluation item in the same manner as in Example 1. The result of the evaluation is shown in Table 2.

[Table 1]

| Blending composition | | | | Example 1 | Example 2 | Example 3 | Example 4 | Example 5 | Example 6 | Example 7 | Example 8 | Example 9 |
|---|---|---|---|---|---|---|---|---|---|---|---|---|
| Blending composition | | Methyl methacrylate | Part by weight | 95.0 | 97.0 | 93.0 | 94.5 | 95.0 | 95.0 | 95.0 | 95.0 | 95.0 |
| | | Butyl acrylate | Part by weight | 5.0 | 3.0 | 7.0 | | 5.0 | 5.0 | 5.0 | 5.0 | 5.0 |
| | | Methyl acrylate | Part by weight | - | - | - | 5.5 | - | - | - | - | |
| | | Styrene | Part by weight | - | - | - | - | - | - | | - | 1.0 |
| | | 1,6-hexane diacrylate | Part by weight | 0.10 | 0.10 | 0.10 | 0.10 | 0.06 | 0.18 | 0.10 | 0.10 | 0.10 |
| | | Sodium triphosphate in initiation step | Part by weight | 0.53 | 0.53 | 0.53 | 0.53 | 0.53 | 0.53 | 1.05 | 0.41 | 0.53 |
| | | Cyclohexane | Part by weight | 1.50 | 1.50 | 1.50 | 1.50 | 1.50 | 1.50 | 1.50 | 1.50 | 1.50 |
| Physical properties | | Volume-average particle size | mm | 0.42 | 0.42 | 0.42 | 0.42 | 0.42 | 0.42 | 0.34 | 0.48 | 0.42 |
| | | Filling property | - | E | E | E | E | E | E | E | G | E |
| | | Expandability | - | E | G | E | G | E | G | G | E | E |
| | | Shrinking property | - | E | E | G | E | G | E | E | E | E |
| | | Surface quality | - | E | E | G | E | G | E | G | E | E |
| | | Residue | - | E | E | E | E | E | E | E | E | G |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Blending composition | Methyl methacrylate | Part by weight | 100.0 | 88.0 | 95.0 | 95.0 | 95.0 | 95.0 |
| | Butyl acrylate | Part by weight | - | 12.0 | 5.0 | 5.0 | 5.0 | 5.0 |
| | Methyl acrylate | Part by weight | - | - | - | - | - | - |
| | Styrene | Part by weight | - | - | - | - | - | 3.0 |
| | 1,6-hexane diacrylate | Part by weight | 0.10 | 0.10 | 0 | 0.22 | 0.10 | 0.10 |
| | Sodium triphosphate in initiation step | Part by weight | 0.53 | 0.53 | 0.53 | 0.53 | 0.17 | 0.53 |
| | Cyclohexane | Part by weight | 1.50 | 1.50 | 1.50 | 1.50 | 1.50 | 1.50 |
| Physical properties | Volume-average particle size | mm | 0.42 | 0.42 | 0.42 | 0.42 | 0.70 | 0.42 |
| | Filling property | - | E | E | E | E | P | E |
| | Expandability | - | P | E | E | P | E | E |
| | Shrinking property | - | E | P | P | E | E | E |
| | Surface quality | - | P | P | P | P | P | E |
| | Residue | - | E | E | E | E | E | P |

Industrial Applicability

An embodiment of the present invention makes it possible to provide expandable methyl methacrylate resin particles capable of providing a foamed molded product which has excellent surface quality and with which a residue hardly remains after burning. Therefore, an embodiment of the present invention is suitably applicable to an evaporative pattern for use in metal casting by a full mold technique.

**Claims**

1.  Expandable methyl methacrylate resin particles comprising:

    a base resin including, as constitutional units, a methyl methacrylate unit, an acrylic ester unit, and a constitutional unit derived from a crosslinking agent; and
    a blowing agent,
    the expandable methyl methacrylate resin particles having a volume-average particle size of 0.30 mm to 0.50 mm, in the base resin,

    (a) a content of the methyl methacrylate unit being 90.0 parts by weight to 99.0 parts by weight and a content of the acrylic ester unit being 1.0 part by weight to 10.0 parts by weight, relative to a total amount of 100 parts by weight of the methyl methacrylate unit and the acrylic ester unit,
    (b) a content of the constitutional unit derived from the crosslinking agent being not less than 0.05 parts by weight and less than 0.20 parts by weight relative to the total amount of 100 parts by weight of the methyl methacrylate unit and the acrylic ester unit, and
    (c) a content of a constitutional unit derived from an aromatic vinyl compound being not more than 2.5 parts by weight relative to 100 parts by weight of the base resin.

2.  The expandable methyl methacrylate resin particles as set forth in claim 1, wherein the acrylic ester is butyl acrylate.

3.  Methyl methacrylate expanded particles produced by expanding expandable methyl methacrylate resin particles recited in claim 1 or 2.

4.  A methyl methacrylate foamed molded product produced by carrying out in-mold molding with respect to methyl methacrylate expanded particles recited in claim 3.

5.  An evaporative pattern comprising a methyl methacrylate foamed molded product recited in claim 4.

## INTERNATIONAL SEARCH REPORT

International application No.

PCT/JP2021/008342

### A. CLASSIFICATION OF SUBJECT MATTER
Int.Cl. C08F220/14(2006.01)i, C08J9/16(2006.01)i
FI: C08J9/16CEY, C08F220/14

According to International Patent Classification (IPC) or to both national classification and IPC

### B. FIELDS SEARCHED

Minimum documentation searched (classification system followed by classification symbols)
Int.Cl. C08F220/14, C08J9/16

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-86804 A (SUMITOMO CHEM CO., LTD.) 28 March 2000 (2000-03-28), claims 1-5, paragraphs [0006]-[0008], [0037]-[0041] | 1-5 |
| X | JP 2015-183111 A (JSP CORPORATION) 22 October 2015 (2015-10-22), claims 1-7, paragraphs [0014], [0030]-[0036], tables 1, 2 | 1-5 |
| P, X | JP 2020-84040 A (JSP CORPORATION) 04 June 2020 (2020-06-04), claims 1-9, paragraphs [0003], [0020]-[0023], [0038], [0051], [0063]-[0074], tables 1-3 | 1-5 |
| P, X | WO 2020/203537 A1 (KANEKA CORPORATION) 08 October 2020 (2020-10-08), claims 1-12, paragraphs [0167]-[0171], [0182], table 1 | 1-5 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 April 2021 | 18 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2021/008342

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-160354 A (JSP CORPORATION) 05 September 2016 (2016-09-05) | 1-5 |
| A | JP 2001-233986 A (KANEGAFUCHI CHEM IND CO., LTD.) 28 August 2001 (2001-08-28), paragraph [0031], table 1 | 1-5 |
| A | JP 2018-135408 A (KANEKA CORPORATION) 30 August 2018 (2018-08-30), paragraph [0028] | 1-5 |
| A | JP 2019-112562 A (KANEKA CORPORATION) 11 July 2019 (2019-07-11), paragraph [0026] | 1-5 |

Form PCT/ISA/210 (second sheet) (January 2015)

**INTERNATIONAL SEARCH REPORT**
Information on patent family members

International application No.

PCT/JP2021/008342

| | | |
|---|---|---|
| JP 2000-86804 A | 28 March 2000 | (Family: none) |
| JP 2015-183111 A | 22 October 2015 | US 2015/0274920 A1<br>claims, examples<br>CN 104945811 A |
| JP 2020-84040 A | 04 June 2020 | (Family: none) |
| WO 2020/203537 A1 | 08 October 2020 | (Family: none) |
| JP 2016-160354 A | 05 September 2016 | US 2018/0030233 A1<br>WO 2016/140223 A1 |
| JP 2001-233986 A | 28 August 2001 | (Family: none) |
| JP 2018-135408 A | 30 August 2018 | (Family: none) |
| JP 2019-112562 A | 11 July 2019 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016047490 A

- JP 2003261603 A